# EUROPEAN PATENT SPECIFICATION

(11) **EP 0 289 309 B1**
(45) Date of publication and mention of the grant of the patent: **13.01.1993**
(21) Application number: 88303850.7
(22) Date of filing: 28.04.1988
(51) Int. Cl.: G11B 7/08

(54) **An apparatus for reading an optical disk**
Gerät zur Wiedergabe einer optischen Platte
Appareil de lecture d'un disque optique

(30) Priority: 28.04.1987 JP 107106/87
(43) Date of publication of application: 02.11.1988
(73) Proprietor: SHARP KABUSHIKI KAISHA, Osaka 545 (JP)
(72) Inventor: Kojima, Kunio, Nara-shi Nara-ken (JP); Sakamoto, Noriaki, Soraku-gun Kyoto (JP); Deguchi, Toshihisa, Nara-shi Nara-ken (JP); Yamane, Daiji, Yamatokohriyama-shi Nara-ken (JP)
(74) Representative: White, Martin David

(56) References cited:
- DE-A- 3 245 000
- US-A- 4 057 832
- PATENT ABSTRACTS OF JAPAN, vol. 11, no. 137 (P-572)(2584), 2nd May 1987; & JP-A-61 276134

## Description

### BACKGROUND OF THE INVENTION

### 1. Field of the invention:

This invention relates to an apparatus for reading an optical disk having tangentially extending tracks, and in particular to an apparatus for reading an optical disk which can accurately and stably control a jump-like movement of a light spot.

### 2. Description of the prior knowledge:

An optical disk comprises a spiral track or concentric tracks in which information is recorded in optically coded form. During the reading or recording process, one or more light spot which is produced by a light source such as a semiconductor laser device scans a desired track or track portion of the optical disk. When another track or track portion is to be scanned, the light spot is rapidly moved from the track or track portion to the other track or track portion in a radial direction, by a driving device which includes a mirror. Hereinafter, such a jump-like movement of a light spot in a radial direction is referred as "a track jump". In order to accurately control a track jump, a so-called tracking error signal has been used.

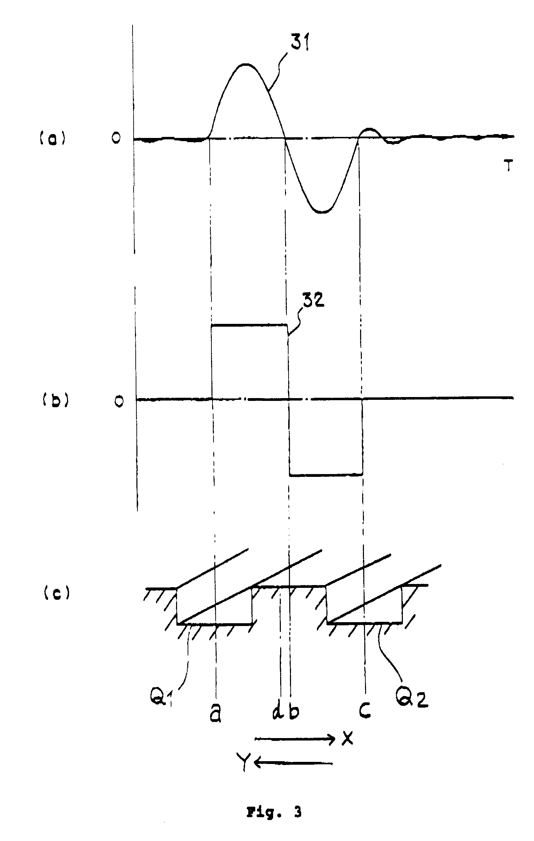

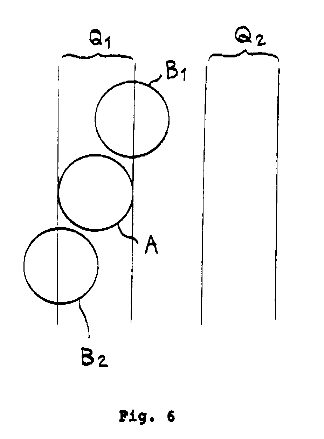

An example of a system in which a tracking error signal is used is described in US patent No. 4,057,832. In the system, as shown in Fig. 6, the reading/recording light spot A is sandwiched between two light spots B₁ and B₂ which are used for tracking servocontrol. Reflected beams of the two light spots B₁ and B₂ are detected by a suitable detector (not shown), and the difference between the two detected values is obtained as a tracking error signal 31 which is plotted in the graph of Fig. 3(a), with time as abscissa and level as ordinate. In the graph, the tracking error signal 31 indicates a change of the intensity level between the reflected beams of the two light spots B₁ and B₂ when the light spots A, B₁ and B₂ move in a radial direction with a constant velocity. When the light spot A is positioned at the center portion a of a track Q₁, the center portion c of an adjacent track Q₂, or the intermediate portion b between the two tracks, the level of the tracking error signal 1 is zero. From the tracking error signal 31 shown in Fig. 3(a), a track jump signal 32 (Fig. 3(b)) is produced. The track jump signal 32 is applied to a driving device for positioning the light spots, so that the driving device is accelerated or decelerated in accordance with the polarity of the track jump signal 32 to affect the track jump. When the polarity of the tracking error signal 31 is positive, the track jump signal 32 is positive to function as an acceleration signal, and when the polarity becomes negative, the track jump signal 32 is switched to be negative to function as a deceleration signal. The deceleration signal is applied for the same period of time as the acceleration signal.

However, acceleration characteristics and deceleration characteristics are not always identical with each other in all kinds of driving device usually employed in such systems. When such systems are used for conducting high-speed track jumps in order to reduce the period of time required for track jumps, the response of the driving device to the track jump signal 32 is delayed. Hence, a track jump cannot be conducted stably and accurately in such a conventional system wherein the polarity of the track jump signal 32 is switched at the instant when the level of the tracking error signal 1 reduces to zero (i.e., when the light spot A is positioned at the intermediate portion b). Hereinafter, such the location at the light spot A when the polarity of the track jump signal is switched is referred as "a switch position".

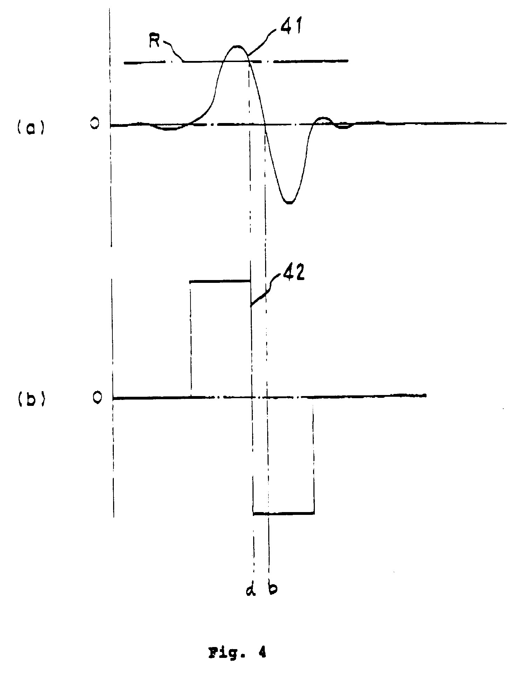

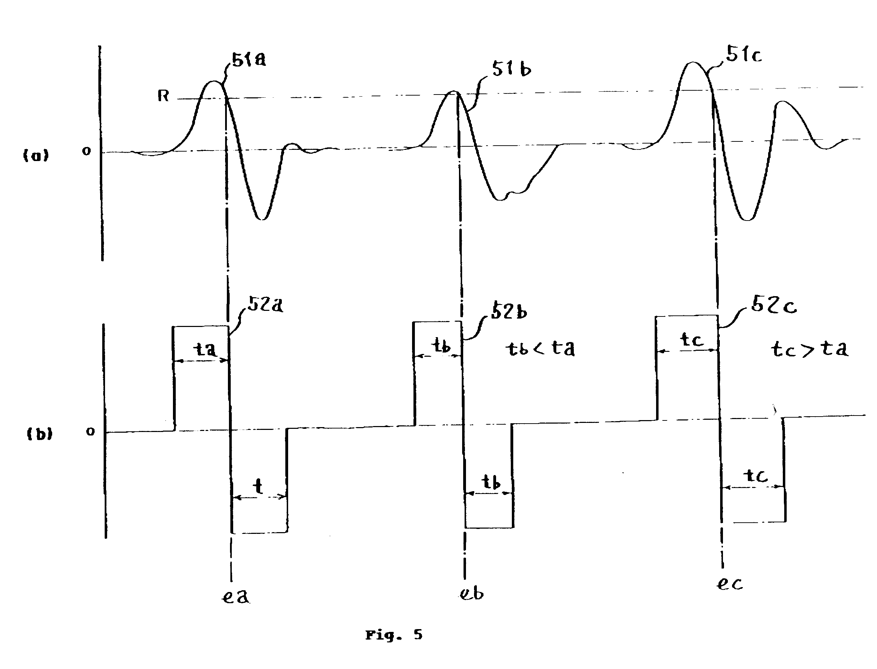

In order to solve the above-mentioned problem of the prior art, the inventors developed an improved system in which a track jump is conducted as follows: When a tracking error signal 41 (Fig. 4(a)) decreases to a predetermined level R, i.e., when the light spot A moves to a location d which is positioned slightly short of the intermediate location b, the polarity of a track jump signal 42 (Fig. 4(b)) is switched to negative so that a driving device is decelerated. The above-mentioned problem may be solved by the improved system. As shown in Fig. 5(a), however, the peak value of a tracking error signal is not uniform but varies in accordance with detecting conditions such as a focus-servo condition, the shape of the tracks, and efficiency of detecting a reflected light beam. In Fig. 5(a), three examples of tracking error signals 51a, 51b and 51c are shown. According to the improved system, the polarity of a track jump signal is changed when the level of a tracking error signal decreases to a predetermined level R. When the tracking error signals 51a, 51b and 51c are compared with the predetermined level R, therefore, the switch position corresponding to each of the track jump signals 52a, 52b and 52c moves as indicated by references ea, eb and ec in Fig. 5(b), respectively. Consequently, the application times ta, tb and tc of track jump signals 52a, 52b and 52c fluctuate, resulting in an unstable track jump.

JP-A-61276134 (A) discloses an apparatus for reading an optical disk having tangentially extending tracks, including: a driving device for moving at least one light spot a first circuit means for producing a tracking error signal which indicates a deviation of said light spot from one of said tracks; and a second circuit means for producing acceleration and deceleration signals, said driving device being controlled to affect a track jump of said light spot in accordance with said acceleration and deceleration signals, a holding means for holding a peak value of said tracking error signal; a third circuit means for obtaining a ratio of the level of said tracking error signal to said peak value held by said holding means; and a comparing means for producing a timing signal the state of which changes when said ratio reaches a predetermined value, said second circuit means producing the acceleration signal when a track jump is to be initiated, and producing the deceleration signal when receiving said timing signal.

However, the circuit disclosed in JP-A-61276134 (A) requires two holding means, one for positive peak values and one for negative peak values, two ratio circuits and two comparing means.

Furthermore, the circuit disclosed in JP-A-61276134 (A) does not comprise means for discharging the holding means.

### SUMMARY OF THE INVENTION

According to the present invention there is provided an apparatus for reading an optical disk having tangentially extending tracks, including: a driving device for moving at least one light spot a first circuit means for producing a tracking error signal which indicates a deviation of said light spot from one of said tracks; and a second circuit means for producing acceleration and deceleration signals, said driving device being controlled to affect a track jump of said light spot in accordance with said acceleration and deceleration signals, a holding means for holding a peak value of said tracking error signal; a third circuit means for obtaining a ratio of the level of said tracking error signal to said peak value held by said holding means; and a comparing means for producing a timing signal the state of which changes when said ratio reaches a predetermined value, said second circuit means producing the acceleration signal when a track jump is to be initiated, and producing the deceleration signal when receiving said timing signal, characterised in that said tracking error signal is applied to means for inverting said tracking error signal for a track jump in one direction and not inverting said tracking error signal for a track jump in an opposite direction, to supply the inverted/non-inverted tracking error signal to said holding means; and in that means is provided for discharging said holding means when the tracking error signal has a predetermined polarity, whereby the period of detecting a peak-value of the tracking error signal can be restricted to within the period that the light spot moves from one track to an adjacent track.

Thus, the invention described herein makes possible the objectives of (1) providing an apparatus for reading an optical disk which can accurately control a track jump in accordance with acceleration and deceleration characteristics of the driving device for moving a light spot(s); and (2) providing an apparatus for reading an optical disk which can stably conduct a track jump operation even if the peak value of a tracking error signal fluctuates.

### BRIEF DESCRIPTION OF THE DRAWINGS

This invention may be better understood and its numerous objects and advantages will become apparent to those skilled in the art by reference to the accompanying drawings as follows:
Figure 1 is a circuit diagram illustrating an example of the invention.
Figure 2 shows waveforms of signals appearing in the circuit of Fig. 1.
Figure 3 shows waveforms of signals for illustrating a track jump in a conventional apparatus.
Figures 4 and 5 show waveforms of signals appearing in an improved apparatus.
Figure 6 illustrates a relation between light spots and tracks of an optical disk.

### DESCRIPTION OF THE PREFERRED EMBODIMENTS

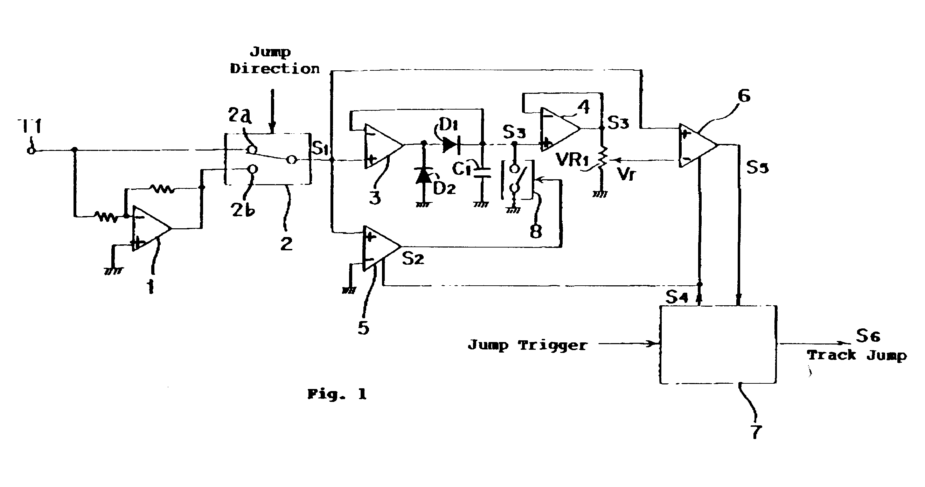

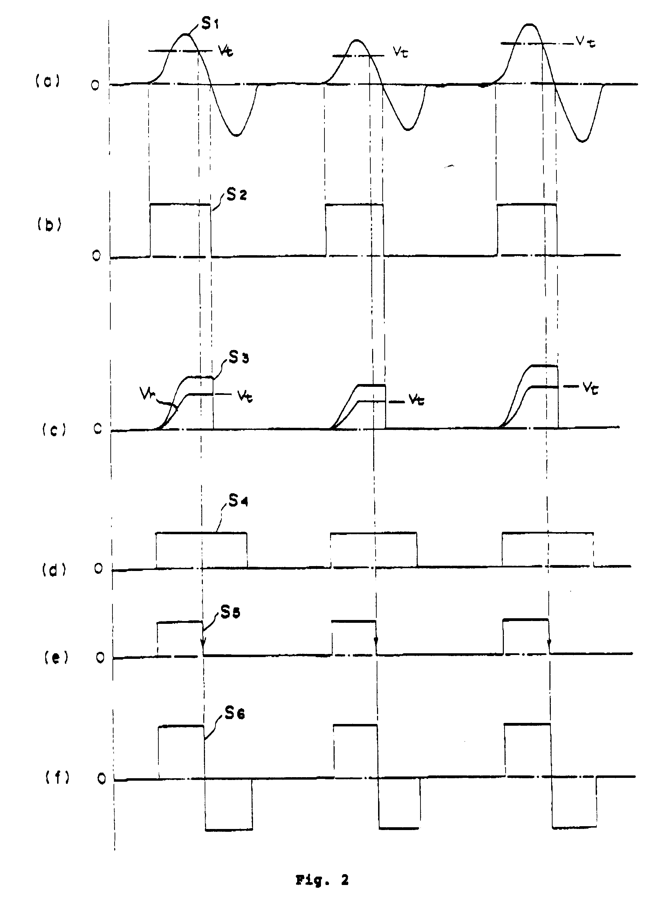

Figure 1 is a circuit diagram illustrating an example of the invention. When a track jump is to be conducted, a jump trigger signal is supplied to a circuit 7 from a control circuit (not shown). The circuit 7 produces a pulse signal S₄ and a track jump signal S₆ having a positive polarity, and a counter (not shown) incorporated in circuit 7 starts to count up clock pulses. The track jump signal S₆ having a positive polarity is supplied to a driving device (not shown) to start a track jump. In fact, the track jump signal S₆ having a positive polarity functions as an acceleration signal. The pulse signal S₄ is supplied to first and second comparators 5 and 6 (which will be described later) to control these comparators. A tracking error signal which is obtained from the light spots B₁ and B₂ in the same manner as the prior art described above is supplied to an input terminal T₁. The input terminal T₁ is connected to a terminal 2a of a first analog switch 2, and also connected to another terminal 2b of the analog switch 2 through an inverse amplifier 1. When the light spot A accompanied by the light spots B₁ and B₂ is to be moved in the direction X (Fig. 3(c)), the analog switch 2 is controlled to position itself at terminal 2a by a jump direction signal which is supplied from the control circuit. In contrast, the analog switch 2 is positioned at terminal 2b when the light spot A is to be moved in the direction Y. Hence, the relation between the polarity of the tracking error signal S₁ appearing at the output of the switch 2 and the position of the light spot A is fixed as shown in Fig. 2(a) irrespective of the direction (X or Y) of a track jump. The tracking error signal S₁ is supplied to a first operational amplifier 3 and the first and second comparators 5 and 6.

The operational amplifier 3, diodes D₁ and D₂, and a capacitor C₁ constitute a peak-hold circuit. The operational amplifier 3 compares the level of the tracking error signal S₁ supplied to the plus input with the potential of the capacitor C₁ supplied to the minus input. As described below, the potential of the capacitor C₁ corresponds to the preceding peak value of the tracking error signal S₁. When the level of the tracking error signal S₁ is higher than the level of the minus input, the output level of the operational amplifier 3 corresponding to the level of the tracking error signal S₁ is applied to the capacitor C₁ through the diode D₁, thereby elevating the potential of the capacitor C₁ up to the level of the tracking error signal S₁. When the level of the tracking error signal S₁ is lower than the level of the minus input, the output of the operational amplifier 3 is kept at the ground level by the diode D₂ so that the potential of the capacitor C₁ is held at the peak value of the tracking error signal S₁.

The terminal voltage S₃ of the capacitor C₁ is applied to the plus input of a second operational amplifier 4 which functions as a voltage follower so that the terminal voltage S₃ is output as a peak-value signal S₃ (Fig. 2(c)). A variable resistor VR₁ to which the peak-value signal S₃ is applied provides a voltage signal Vᵣ. After the level of the signal S₃ has reached the peak-value, the signal Vᵣ is held at the level Vₜ. The ratio of the level Vₜ to the peak value of the signal S₃ has a predetermined value. The voltage signal Vᵣ is supplied to the minus input of the second operational amplifier 4. The ratio of the level Vₜ to the peak value of the signal S₃ can be adequately selected in accordance with acceleration and deceleration characteristics of the driving device used in the apparatus.

The comparator 5 receives the tracking error signal S₁ from the first analog switch 2 to produce a timing signal S₂ for a half cycle of the tracking error signal S₁ as shown in Fig. 2(b). The timing signal S₂ controls a second analog switch 8 so that the capacitor C₁ discharges when the polarity of the tracking error signal S₁ is negative. Therefore, the period of detecting a peak-value of the tracking error signal S₁ by the peak hold circuit can be restricted within the period during which the light spot A moves from track Q₁ to the adjacent track Q₂.

The voltage signal Vᵣ is applied to the minus input of the second comparator 6. When the level of the tracking error signal S₁ applied to the plus terminal is higher than that of the voltage signal Vᵣ, the output (timing signal S₅) of the second comparator 6 is HIGH (Fig. 2(e)). As described below, the timing signal S₅ times the switching of the polarity of the track jump signal S₆. When the tracking error signal S₁ decreases to the level Vₜ after passing the peak, the timing signal S₅ becomes LOW.

The timing signal S₅ is supplied to the track jump signal circuit 7. When the timing signal S₅ becomes LOW, the counter in the circuit 7 begins to count down. At the same time circuit 7 switches the polarity of the track jump signal S₆ to be negative so that the driving device begins to be decelerated. Namely, the track jump signal S₆ having a negative polarity functions as a deceleration signal. When the output of the counter in circuit 7 becomes zero, circuit 7 makes the pulse signal S₄ LOW and ceases the generation of the track jump signal S₆. The period of time during which the polarity of the track jump signal S₆ is positive (i.e., the driving device is accelerated) equals the period of time during which the polarity of the track jump signal S₆ is negative (i.e., the driving device is decelerated).

Two other examples of tracking error signals S₁ having different peak values are also shown in Fig. 2(a). As seen from Fig. 2(f), the timing for changing the polarity of the track jump signal S₆ is substantially the same in all cases irrespective of the peak value of the tracking error signal S₁. In other words, the periods of time during which the track jump signal S₆ is positive or negative are constant even if the peak value of the tracking error signal S₁ fluctuates. Therefore, a track jump can be conducted accurately and stably. As described above, the peak value of the tracking error signal S₁ held by the peak-hold circuit is valid only while the light spot A moves from a track to an adjacent track. When the light spot A is controlled to jump over two or more tracks at one time, the number of tracks which the light spot A has jumped over can be easily recognized by counting the number of the timing signals S₆ because the timing signal S₆ is produced each time the light spot A moves from a track to an adjacent one.

## Claims

1. An apparatus for reading an optical disk having tangentially extending tracks (Q₁, Q₂), including: a driving device for moving at least one light spot (A, B₁, B₂) a first circuit means for producing a tracking error signal (S₁) which indicates a deviation of said light spot (A) from one of said tracks (Q₁, Q₂); and a second circuit means (7) for producing acceleration and deceleration signals (S₆), said driving device being controlled to affect a track jump of said light spot (A) in accordance with said acceleration and deceleration signals (S₆), a holding means (3, D₁, D₂, C₁) for holding a peak value (S₃) of said tracking error signal (S₁); a third circuit means (4, 6, Vr₁) for obtaining a ratio of the level of said tracking error signal (S₁) to said peak value (S₃) held by said holding means (3, D₁, D₂, C₁); and a comparing means (6) for producing a timing signal (S₅) the state of which changes when said ratio reaches a predetermined value, said second circuit means (7) producing the acceleration signal (S₆) when a track jump is to be initiated, and producing the deceleration signal (S₆) when receiving said timing signal (S₅), characterised in that said tracking error signal (S₁) is applied to means (2) for inverting said tracking error signal (S₁) for a track jump in one direction and not inverting said tracking error signal (S₁) for a track jump in an opposite direction, to supply the inverted/non-inverted tracking error signal (S₁) to said holding means (3, D₁, D₂, C₁); and in that means (8) is provided for discharging said holding means (3, D₁, D₂, C₁) when the tracking error signal (S₁) has a predetermined polarity, whereby the period of detecting a peak-value of the tracking error signal (S₁) can be restricted to within the period that the light spot (A) moves from one track (Q₁) to an adjacent track (Q₂).

## Patentansprüche

1. Vorrichtung zum Lesen einer optischen Platte mit Tangentialspuren (Q₁,Q₂), die beinhaltet: eine Antriebseinrichtung für das Bewegen von mindestens einem Lichtpunkt (A,B₁,B₂), ein erstes Schaltkreismittel für das Erzeugen eines Nachführ-Fehlersignals (S₁), welches eine Abweichung des Lichtpunkts (A) von einer der Spuren (Q₁,Q₂) anzeigt und ein zweites Schaltkreismittel (7) für das Erzeugen von Beschleunigungs- und Verzögerungssignalen (S₆), wobei die Antriebseinrichtung gesteuert wird, um einen Spursprung des Lichtpunkts (A) in Übereinstimmung mit den Beschleunigungs- und Verzögerungssignalen (S₆) zu beeinflussen, ein Haltemittel (3, D₁, D₂, C₁) für das Festhalten eines Spitzenwerts (S₃) des Nachführ-Fehlersignals (S₁), ein drittes Schaltkreismittel (4, 6, Vᵣ₁) zum Empfangen eines Verhältniswertes des Pegels des Nachführ-Fehlersignals (S₁) zu dem Spitzenwert (S₃), der durch das Haltemittel (3, D₁, D₂, C₁) festgehalten wird und ein Vergleichsmittel (6) für das Erzeugen eines Zeitsteuerungssignals (S₅), dessen Status sich ändert, wenn der Verhältniswert einen vorbestimmten Wert erreicht, wobei das zweite Schaltkreismittel (7) das Beschleunigungssignal (S₆) dann erzeugt, wenn ein Spursprung einzuleiten ist und das Verzögerungsignal (S₆) dann erzeugt, wenn das Zeitsteuerungssignal (S₅) empfangen wird, **dadurch gekennzeichnet,** daß das Nachführ-Fehlersignal (S₁) an ein Mittel (2) zum Invertieren des Nachführ-Fehlersignals (S₁) für einen Spursprung in einer Richtung und zum Nicht-Invertieren des Nachführ-Fehlersignals (S₁) für eine Spursprung in einer entgegengesetzten Richtung angelegt wird, um das invertierte/nicht invertierte Nachführ-Fehlersignal (S₁) an das Haltemittel (3,D₁,D₂,C₁) anzulegen und dadurch, daß ein Mittel (8) vorgesehen ist, um das Haltemittel (3,D₁,D₂,C₁) zu entladen, wenn das Nachführ-Fehlersignal (S₁) eine vorbestimmte Polarität hat, wodurch der Zeitraum für das Feststellen eines Spitzenwerts des Nachführ-Fehlersignals (S₁) auf die Zeit innerhalb des Zeitraums beschränkt werden kann, während welchem sich der Lichtpunkt (A) von einer Spur (Q₁) zu einer angrenzenden Spur (Q₂) bewegt.

## Revendications

1. Appareil de lecture d'un disque optique ayant des pistes s'étendant tangentiellement (Q₁, Q₂) comprenant : un dispositif d'entraînement pour déplacer au moins une tache lumineuse (A, B₁, B₂), un premier moyen de circuit pour produire un signal d'erreur de centrage (S₁) qui indique un écart de ladite tache lumineuse (A) par rapport à l'une desdites pistes (Q₁, Q₂); et un deuxième moyen de circuit (7) pour produire des signaux d'accélération et de décélération (S₆), ledit dispositif d'entraînement étant commandé pour provoquer un saut de piste de ladite tache lumineuse (A) conformément auxdits signaux d'accélération et décélération (S₆), un moyen de maintien (3, D₁, D₂, C₁) pour retenir une valeur de pic (S₃) dudit signal d'erreur de centrage (S₁); un troisième moyen de circuit (4, 6, Vr₁) pour obtenir un rapport entre le niveau dudit signal d'erreur de centrage (S₁) et ladite valeur de pic (S₃) retenue par ledit moyen de retenue (3, D₁, D₂, C₁); et un moyen de comparaison (6) pour produire un signal de synchronisation (S₅) dont l'état varie lorsque ledit rapport atteint une valeur prédéterminée, ledit deuxième moyen de circuit (7) produisant le signal d'accélération (S₆) lorsqu'un saut de piste doit être lancé et produisant le signal de décélération (S₆) lorsqu'il reçoit ledit signal de synchronisation (S₅), caractérisé en ce que ledit signal d'erreur de centrage (S₁) est appliqué à un moyen (2) pour inverser ledit signal d'erreur de centrage (S₁) pour un saut de piste dans un sens et pour ne pas inverser ledit signal d'erreur de centrage (S₁) pour un saut de piste dans un sens opposé afin de fournir le signal d'erreur de centrage inversé/non inversé (S₁) audit moyen de maintien (3, D₁, D₂, C₁); et en ce qu'un moyen (8) est prévu pour décharger ledit moyen de maintien (3, D₁, D₂, C₁) lorsque le signal d'erreur de centrage (S₁) a une polarité prédéterminée, grâce à quoi la période de détection d'une valeur de pic du signal d'erreur de centrage (S₁) peut être limitée à rester à l'intérieur de la période où la tache lumineuse (A) passe d'une piste (Q₁) à une piste adjacente (Q₂).
